# EUROPEAN PATENT SPECIFICATION

(11) **EP 4 610 548 B1**
(45) Date of publication and mention of the grant of the patent: **08.07.2026**
(21) Application number: 24160766.2
(22) Date of filing: 01.03.2024
(51) Int. Cl.: F21S 8/02, F21V 7/00, F21S 8/04, F21S 8/06, F21V 8/00

(54) **DOWNLIGHT LUMINAIRE WITH DIRECT AND INDIRECT ILLUMINATION**
DOWNLIGHT-LEUCHTE MIT DIREKTER UND INDIREKTER BELEUCHTUNG
LUMINAIRE DE PLAFONNIER À ÉCLAIRAGE DIRECT ET INDIRECT

(43) Date of publication of application: 03.09.2025
(73) Proprietor: Zumtobel Lighting GmbH, 6850 Dornbirn (AT); Zumtobel Lighting GmbH, 32657 Lemgo (DE)
(72) Inventor: Ludwiczak-Osterloher, Bogna, 6851 Dornbirn (AT); Gassner, Patrik, 6851 Dornbirn (AT); Schmidt, Carsten, 6851 Dornbirn (AT); von Kloeden, Burkhard, 6851 Dornbirn (AT); Sulzbach, Lennart, 6851 Dornbirn (AT)
(74) Representative: Thun, Clemens

(56) References cited:
- EP-A1- 3 557 124
- WO-A1-2013/008221
- US-A1- 2017 254 487
- US-A1- 2021 116 084
- US-A1- 2024 060 610

## Description

The invention relates to a downlight luminaire, emitting light in different general directions for both direct and indirect illumination.

Currently known downlight luminaires are usually just configured for a direct illumination of a respective to be illuminated area. Additional indirect lighting, which is perceived as more pleasant by the human eye, usually hasn't been provided for downlight luminaires. With new regulations and requirements, such as the DIN EN 12464-1:2021-11 standard, an illuminance average value of 1001x is required on the ceiling for office areas. This requirement is extremely difficult to meet with conventional known downlight luminaires.

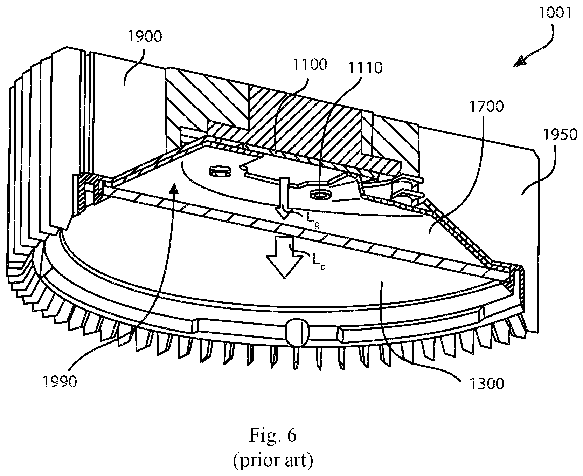

The EP 2 539 629 B1 shows such a currently known downlight luminaire, whereas this prior art luminaire is also illustrated in Figure 6. The downlight luminaire 1001 hereby comprises a base body 1900, whose body walls 1950 form a recess in which the electrical components of the luminaire 1001 and optical elements are positioned. Hereby, a light source board 1100 is mounted on an inside surface of the base body 1900, whereas light sources 1110 are placed on the light source board 1100. These light sources 1110 emit light in a general light emission direction L_{g} towards a translucent cover plate 1300 that acts as a light emission surface of the luminaire 1001. In-between the cover plate 1300 and the light source board 1100 a light mixing chamber 1990 is present that is configured for light mixing and thus homogenises the emitted light. The translucent cover plate 1300 closes the base body 1900 from the downside of the luminaire 1001 and thus also acts as a protection against moisture, water and dust. Inside the enclosed area of the base body 1900 a lateral reflector 1700 is arranged extending from the light source board 1100 towards the translucent cover plate 1300 to direct emitted light towards the cover plate 1300. Light emitted via the translucent clover plate 1300 is emitted for direct illumination L_{d} such that all light emitted via the light sources 1110 is emitted for direct illumination L_{d}.

US 2017/0254487 A1 discloses a prior art luminaire which includes a first light distributor which illuminates a predetermined region, and a second light distributor which illuminates a periphery of the predetermined region.

More recent versions of downlight luminaires are known in which an additional light portion is emitted upwards to the ceiling (or, depending on the mounting direction, sideways to a wall) by mechanically moving light redirecting elements, thus providing indirect lighting to meet the new lighting requirements. The indirect lighting created in this way is, however, extremely susceptible to wear due to its mechanical components and can only be configured and adjusted with considerable effort - namely through mechanical adjustment.

Thus, the invention is concerned with the task of providing an improved downlight luminaire for direct and indirect illumination with a flexible configuration and adjustment. This task is solved by the downlight luminaire according to independent claim 1. The invention is defined in the independent claim. Additional features of the invention are provided in the respective dependent claims.

According to the invention the downlight luminaire has a light emission for direct illumination and a light emission for indirect illumination. Hereby the luminaire comprises:
- a light source board, having multiple light sources, for light emission in a general light emission direction;
- a light mixing chamber for homogeneous light mixing subsequent to the light source board in the general light emission direction, wherein the light mixing chamber has lateral walls;
- a translucent cover plate that encloses the light mixing chamber in the general light emission direction; and
- a light guide element, whereas the light guide element is integrally formed and essentially flange-shaped with a curved L shape in a radial section, wherein the light guide element has a light coupling surface being positioned within the light mixing chamber and facing the light source board, and wherein the light guide element has an inclined light decoupling surface at a distal end region of the light guide element, whereas the inclined light decoupling surface of the light guide element is positioned outside of and lateral to the light mixing chamber.

Here light that is coupled into the light guide element via the light coupling surface, is partially directed towards the inclined light decoupling surface within the light guide element. Also light emitted via the translucent cover plate is emitted for direct illumination substantially in the general light emission direction; whereas light emitted via the inclined light decoupling surface is emitted for indirect illumination and substantially emitted in an indirect light emission direction being a direction contrary to the general light emission direction.

With this downlight luminaire an utmost flexible and easy configuration is achieved allowing for both direct and indirect illumination of a respective space. Hereby, the light guide element is the key component for realizing light decoupling in a direction contrary to the general light emission direction of the light sources of the luminaire, resulting in an indirect light emission of the luminaire. With its L-shape in radial section of the light guide element, light coupled into an end face of the light guide element as the light coupling surface is directed towards the distal end of the light guide element. Here light emitted by the light sources into the light mixing chamber is coupled into the light guide element - e.g., via the light coupling surface - and guided outside of the luminaire to achieve a light emission in a counter direction to the general light emission direction of the light sources. Hereby, this shape and configuration of the light guide element does not obstruct light mixture within the light mixing chamber - and in contrary may even further support light mixture. With the inclined light decoupling surface an easy but yet efficient light decoupling towards a wall or a ceiling (depending on the mounting orientation of the luminaire) is achieved, resulting in an utmost favourable indirect light emission of the downlight luminaire in addition to the direct light emission provided via the translucent cover plate. Hence, with this presented configuration both a sufficient direct light emission via the translucent cover plate, as well as an indirect light emission via the inclined light decoupling surface of the light guide element of the luminaire is achieved. Due to the lack of mechanically moving components for realization of the indirect light emission wear of the luminaire and thus maintenance needs are reduced to a minimum.

Optionally, depending on the implementation of the light guide element it is further conceivable that light may also be coupled into the light guide element via sidewalls of the light guide element as well - in addition to the light coupling surface directly facing the light source board. This further increases the possible share of the indirect light emission in the total light emission (i.e., direct and indirect light emission combined) of the downlight luminaire.

Further optionally, light that is coupled into the light guide element via the light coupling surface (and/or via sidewalls of the light guide element in the light mixing chamber), is (at least) partially directed towards the inclined light decoupling surface within the light guide element. The other potential portion of this light previously coupled into the light guide element may hereby be decoupled from the light guide element within the light mixing chamber. Hereby it is in particular conceivable that this is performed in the bended junction section of the curved L shape. However, even this portion of light that is decoupled from the light guide element is still directed towards the translucent cover plate, such that also this portion is efficiently used for direct illumination by the luminaire. Hence, efficiency of the luminaire is further improved.

Optionally the light guide element comprises an essentially hollow-cylindrical neck section, an essentially plate-shaped ring section and a bend section connecting the neck section and the plate-shaped ring section, wherein the end face of the neck section faces the light sources, forming the light coupling surface of the light guide element, the plate-shaped ring section has a wedge-shaped section viewed in radial section at the distal end region of the light guide element forming the inclined light decoupling surface of the light guide element. With this specific configuration of the light guide element an utmost efficient light guide for realizing an additional light decoupling for indirect illumination is presented. This exemplary implementation of the curved L shape light guide element allows for efficient light coupling via various surfaces within the light mixing chamber of the luminaire (i.e., e.g., via the light coupling surface; via sidewalls of the light guide element within the light mixing chamber, and here in particular for example via sidewalls of the neck section and/or the ben section), and efficiently directs coupled light towards the distal end region of the light guide element for decoupling via the inclined light decoupling surface. Hereby preferably, the light guide element is configured such that light being coupled into the light guide element via the light coupling surface is directed via the neck portion towards the bend portion, where it is at least partially guided towards the plate-shaped ring section. Further preferred the other portion of the light that was previously coupled into the light guide element but does not reach the distal end region of the light guide element is decoupled in the bend portion from the light guide element and directed towards the translucent cover plate. In this way the complete light being emitted from the light sources is used for illumination, partially for indirect light emission and partially direct light emission.

Optionally the light sources, are arranged on the light source board in concentric rings. With this implementation, the configuration of the arrangement of the light sources on the light source board is easily adaptable to various shapes of the luminaire and thus of the light source board. The concentric rings further facilitate coordination of the arrangement of the light guide element, especially in an exemplary embodiment where it is considered that the light coupling surface shall be arranged facing one of the light source rings. This further improves light coupling and thus aids in achieving a higher portion of light emitted for indirect illumination. Preferably a diameter of a respective ring with light sources, substantially corresponds to a diameter of the light coupling surface.

Optionally the light source board has light sources, associated to the light guide element, wherein respective associated light sources are arranged on the light source board adjacent to the light coupling surface of the light guide element. This further improves light coupling into the light guide element and further increases light being directed towards the distal ends of the light guide element for light emission in a direction substantially contrary to the general light emission direction.

Optionally the light sources, are divided into different light groups, a primary-direct-light group and a primary-indirect-light group, wherein the light sources of the primary-direct-light group primary emit light towards the translucent cover plate, and wherein the light sources of the primary-indirect-light group primary emit light towards the light coupling surface of the light guide element. While all the light sources emit light in the general light emission direction, the light emitted by the primary-indirect-light group is mainly directed towards the light coupling surface of the light guide element, and thus the portion of light that reaches the distal end region of the light guide element is mainly influenced by the primary-indirect-light group. Preferably the different light groups are independently controllable by the downlight luminaire. With this implementation, the amount of light emitted for indirect illumination is variable and further easily controllable. Furthermore, the proportion between direct and indirect light emission is easily adjustable in this configuration, as the different light groups are separately selectable.

Optionally light emitted by the light sources of the primary-direct-light group is partially also coupled into the light guide element and thereby guided towards the inclined light decoupling surface for indirect illumination. With this implementation, operation in various illumination scenarios is further facilitated, and it is further achieved that in every operation mode of the luminaire at least a small portion of light is emitted for indirect illumination. Preferably operation of the light sources of the primary-direct-light group results in indirect light emission accounting for 1% to 5%, further preferably for 3% to 5%, of total light emission of the downlight luminaire. This ensures that in any operation mode of the downlight luminaire at least 1% to 5%, respectively 3% to 5%, or any specific value in-between, is emitted in the contrary light emission direction for indirect illumination. E.g., when operating only the primary-direct-light group of the light sources, a slight illumination of the respective wall or ceiling is achieved, whereas the illumination pattern could be described as an halo. Thus, in this implementation in scenarios of having only a smart portion of light emitted for indirect illumination, the downlight luminaire has a halo effect as indirect lighting besides the usual direct lighting effect. Further preferably, operation of the light sources of the primary-direct-light group together with the light sources of the primary-indirect-light group results in indirect light emission accounting for up to 25%, preferably for up to 28% or up to 30% of total light emission of the downlight luminaire. In this operation a large-area ceiling (or wall) illumination is achieved by the such configured downlight luminaire. Hence, with the different operation modes and thus the different control of the light source groups various illumination scenarios are achievable. As the control of the luminaire is purely electronic, no moving mechanical parts are required for changing illumination modes of the downlight luminaire.

Optionally the relation between the number of light sources of the primary-direct-light group and the number of light sources of the primary-indirect-light group is essentially 2:1. Hereby the number of light sources of the primary-direct-light group may be in the range of 30 to 70, preferably in the range of 40 to 60, further preferably about 50 or 48, and the number of light sources of the primary-indirect-light group may be in the range of 15 to 35, preferably in the range of 20 to 30, further preferably about 25 or 24. These ranges and these specific relations resulted in favourable light distribution for direct and indirect light emission.

Optionally the downlight luminaire comprises a reflector foil that is positioned in proximity of the distal end region at a side of the light guide element opposite to the inclined light decoupling surface. With such a reflector foil, light emission in the light emission direction contrary to the general light emission direction is further improved. Preferably the reflector foil is highly reflective. This further reduces light losses, and thus also further improves light emission direction contrary to the general light emission direction, i.e., indirect illumination of the downlight luminaire. Preferably the reflector foil is arranged inclined to the surface of the distal end region that faces the reflector foil. By this special configuration the light emission angle of the light emitted in direction contrary to the general light emission direction is variable. The inclination of the reflector foil and the incline of the decoupling surface of the light guide element likewise influence the beam width of the light distribution of the emitted light for indirect illumination. In general, a more inclined reflector reflects the light less steep upwardly. Further preferably the incline of the reflector foil is different from the incline of the inclined light decoupling surface. With this configuration light emission for indirect illumination is further improved in a synergistic manner, resulting in an improved homogenous light emission in direction contrary to the general light emission direction. Further preferably the incline of the reflector foil is less steep, i.e., has a smaller angle, compared to the incline of the inclined light decoupling surface. With this configuration the light emission for indirect illumination of the downlight luminaire is implemented for a more direct illumination of the respective ceiling (or wall), i.e., the light is emitted in a steeper manner in direction contrary to the general light emission direction.

Optionally the inclined light decoupling surface comprises a scattering structure for light mixture upon light decoupling. With this implementation light emission for indirect illumination is further homogenized. Furthermore, specific light emission characteristics can be realized with varying scattering structures depending on the desired illumination scenario.

Optionally the downlight luminaire comprises a lateral translucent cover that covers the distal end region of the light guide element in indirect light emission direction facing the inclined light decoupling surface. This additional cover provides protection against humidity, water and dust. Furthermore, it protects the light guide element from outside influences, especially during installation of the downlight luminaire, as the lateral translucent cover is hereby usually installed on a side of the downlight luminaire facing the respective ceiling (or wall). Preferably the lateral translucent cover is conical in shape in a radial section, whereas further preferably the incline of the lateral translucent cover is more steep compared to the incline of the inclined light decoupling surface. With this implementation the such configured inclined light decoupling surface and the lateral translucent cover synergistically influence the indirect light emission direction. Preferably the lateral translucent cover is transparent, or in an other preferred configuration the lateral translucent cover comprises a groove structure. Hereby the groove structure may have an essential sinusoidal shape in a section perpendicular to the radial section. The such configured lateral translucent cover with the groove structure further influences the light emitted for indirect illumination, and hereby further homogenizes it. Depending on the groove structure different lighting patterns are conceivable.

Optionally the luminaire comprises a base body, whereas the base body comprises a recess, and the light source board is positioned within the recess on an inner surface of the base body. With this implementation, the light mixing chamber may be partially formed by side walls of the base body. Further, the base body may also comprise a light source mounting surface where the light source board is mounted on. Preferably the base body forms a heat sink of the downlight luminaire. This improves heat derivation, and enhances durability of the electronic components of the luminaire. Also preferably the base body comprises a through hole, wherein an electrical connector of the light source board is positioned within the through hole. This further eases installation of the downlight luminaire and also connection of the luminaire with an external electronic connector.

Optionally the downlight luminaire comprises a reflector element that is positioned subsequent to the translucent cover plate in the general light emission direction. This further improves light emission for direct illumination. Hereby light that is emitted via the translucent cover plate is guided in a respective desired manner. Depending on the characteristics of the reflector different illumination scenarios for direct illumination are achievable. Preferably the reflector element is attached to a lower housing element of the downlight luminaire and/or to the base body. Preferably the lower housing element is coupled to the base body. This implementation allows for a modular setup of the luminaire such that the reflector element may be attached or removed depending on a respective desired lighting scenario of the luminaire. Thus, flexibility and also stability of the luminaire is increased with the reflector element and the lower housing element.

Optionally the aforementioned lateral translucent cover may be coupled to the lower housing element and/or the base body of the downlight luminaire. This may be realized via a snap-fit connection.

Optionally the light mixing chamber comprises a lateral reflector that is positioned in general light emission direction in-between the light source board and a surface of the light guide element facing the light source board, which is preferably the plate-shaped ring section facing the light source board, wherein the lateral reflector is a lateral wall of the light mixing chamber. With this implementation, light mixture within the downlight luminaire is further improved. Also with this lateral reflector light that passes through the light guide element, especially in the neck portion, can be guided towards the translucent cover plate. Here it is also conceivable that the light reflected by the lateral reflector is subsequently coupled into the light guide element for guidance towards its lateral end portion for light emission in indirect light emission direction.

Optionally a luminaires base area is elongated in shape, and is in particular oval or rectangular; or the luminaires base area is circular in shape; or the luminaires base area is square in shape; wherein preferably the shape of the light source board and/or the positioning of the light sources, are adapted to the shape of the luminaires base area. Hence, different shapes of the downlight luminaire are achievable, whereas the shape of the light source board, and also the respective arrangement of the light sources, as well as the shape of the light guide element are equally adjustable thereto.

Optionally the light guide element has a constant thickness of 3-5mm, preferably 3-4 mm, up to the narrower distal end region of the light guide element with the inclined light decoupling surface. With this implementation the light guiding characteristic of the light guide element is improved for light guidance towards the distal end region thereof. Also this implementation further aids for homogenous light mixture within the light mixing chamber.

Optionally the translucent cover plate is diffuse. This further improves aesthetics of the luminaire and furthermore homogenizes the light emitted for direct illumination.

Optionally the light sources are LEDs light sources, and the light source board being an LED board. With LEDs as light sources an utmost flexible and precise light emission is achieved.

Optionally the downlight luminaire is one of a surface-mounted ceiling light; a surface-mounted wall light; a suspended luminaire, such as a pendant luminaire; or the like. This allows for operation in various scenarios and forms the luminaire utmost flexible.

The invention is explained in detail below with reference to examples of embodiments and with reference to the drawing. The figures show:
- Figure 1A: schematic cross-sectional illustration in an angled view from above of an exemplary embodiment of a downlight luminaire according to the invention having a light emission for direct illumination and a light emission for indirect illumination;
- Figure 1B: enlarged view of the schematic cross-sectional illustration of the exemplary embodiment of a downlight luminaire according to the invention known from Figure 1A;
- Figure 2A: schematic cross-sectional illustration in an angled view from below of an exemplary embodiment of components of a downlight luminaire according to the invention having a light emission for direct illumination and a light emission for indirect illumination;
- Figure 2B: detailed view of the schematic cross-sectional illustration in an angled view from below of an exemplary embodiment of components of a downlight luminaire according to the invention having a light emission for direct illumination and a light emission for indirect illumination;
- Figure 3A: schematic cross-sectional illustration in a side view of an exemplary embodiment of components of a downlight luminaire according to the invention showing light guidance of light for indirect light emission;
- Figure 3B: schematic cross-sectional illustration in a side view of an exemplary embodiment of components of a downlight luminaire according to the invention showing light guidance of light for indirect light emission with a reflector foil being positioned at a distal end region of the light guide element;
- Figure 4: sketch of an exemplary light distribution curve of an exemplary implementation of a light guide element of an exemplary embodiment of a downlight luminaire according to the invention;
- Figure 5: schematic illustration in a top view of an exemplary implementation of a light source board of an exemplary embodiment of a downlight luminaire according to the invention;
- Figure 6: schematic cross-sectional illustration in an angled view from below of an exemplary embodiment of a known downlight luminaire having a light emission for direct illumination.

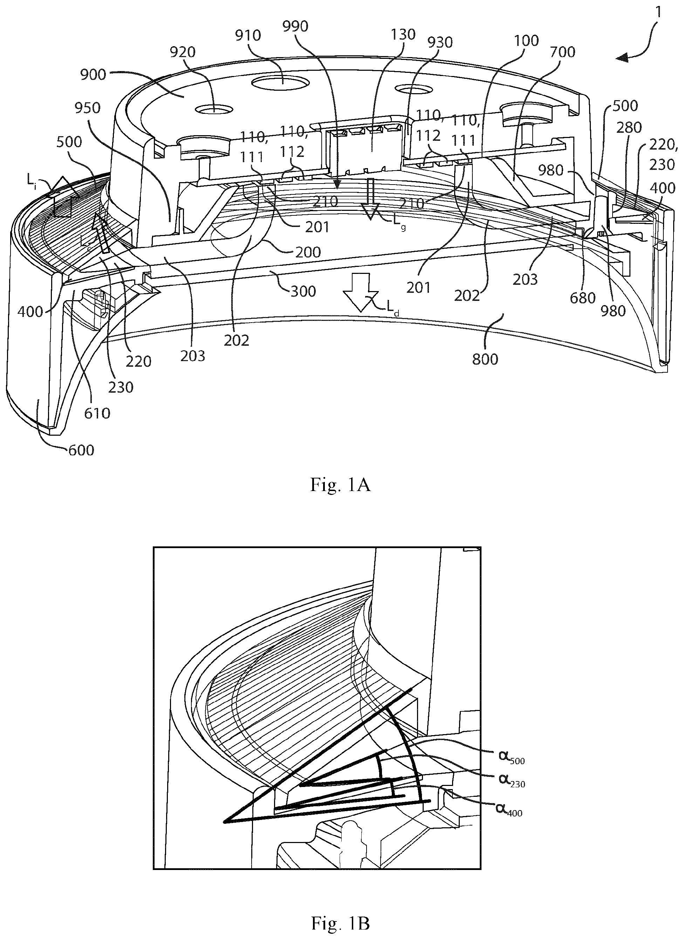

Figure 1A shows a cross sectional view in a radial section of an exemplary embodiment of a downlight luminaire 1 according to the invention. The luminaire 1 hereby comprises a light source board 100, having multiple light sources 110, 111, 112 for light emission in a general light emission direction L_{g}. The light sources 110, 111, 112 are LEDs 110, 111, 112 in the shown embodiment, whereas the LEDs 110, 111, 112 are arranged in concentric circles on the light source board 100, i.e., the LED board 100. Hereby, a diameter L₁, L₂, L₃ of a respective light sources ring substantially corresponds to a diameter d₂₁₀ of the light coupling surface 210. As illustrated some of the light sources 110, 111, 112 are associated to the light guide element 200, wherein respective associated light sources 111 are arranged on the light source board 100 adjacent to the light coupling surface 210 of the light guide element 200.

Subsequent to the light source board 100 in the general light emission direction L_{g}. the luminaire 1 further comprises a light mixing chamber 990 for homogeneous light mixing of the light emitted by the light sources 110, 111, 112. This allows for homogeneous light mixture, and thus improves light emission of the luminaire 1 in general. The light mixing chamber 990 is hereby laterally encompassed by lateral walls 950, 700, whereas these walls 950, 700 can be formed by side walls 950 of a base body 900 of the luminaire 1 and/or by a lateral reflector 700.

Moreover, the luminaire 1 also has a translucent cover plate 300 that encloses the light mixing chamber 990 in the general light emission direction L_{g}, whereas the bottom surface of the translucent cover plate 300, i.e., the surface of the cover plate 300 opposite to the light mixing chamber 990, forms a light emission surface for direct illumination L_{d}. Preferably the translucent cover plate 300 is diffuse, such that the components inside the luminaire 1 are not visible for a spectator of the luminaire 1. Furthermore, this configuration further improves homogeneous light emission for direct illumination L_{d}.

To realise an additional light emission for indirect illumination Lᵢ the luminaire 1 further comprises a light guide element 200 that is mainly arranged within the light mixing chamber 990, as shown in Figure 1A. The light guide element 200 hereby is integrally formed and essentially flange-shaped with a curved L shape in a radial section, wherein the light guide element 200 has a light coupling surface 201 being positioned within the light mixing chamber 990 and facing the light source board 100. The opposite end of the light guide element 200 is formed by an inclined light decoupling surface 230 at a distal end region 220 of the light guide element 200, whereas the inclined light decoupling surface 230 of the light guide element 200 is positioned outside of and lateral to the light mixing chamber 990. Thus, with the light guide element 200 light being emitted within the luminaire 1 in the general light emission direction L_{g} is guided outside of the luminaire 1 and decoupled in the distal end region 220 to form an indirect light emission Lᵢ whereas the light for the indirect illumination Lᵢ is emitted in an indirect light emission direction L_{c} being a direction contrary to the general light emission direction L_{g} as schematically shown in Figures 1A, 2A, 3A and 3B.

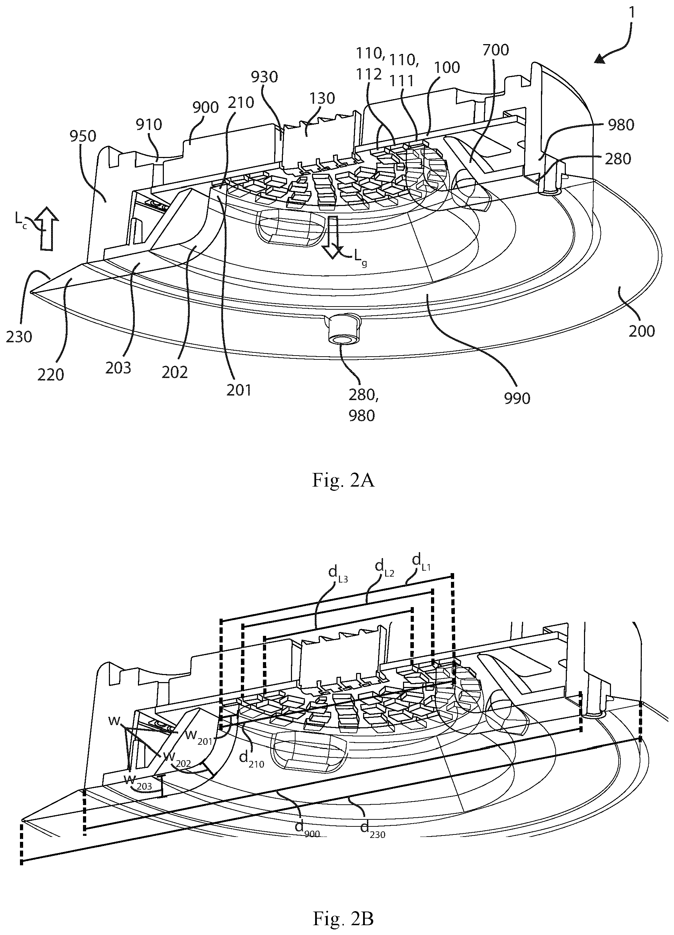

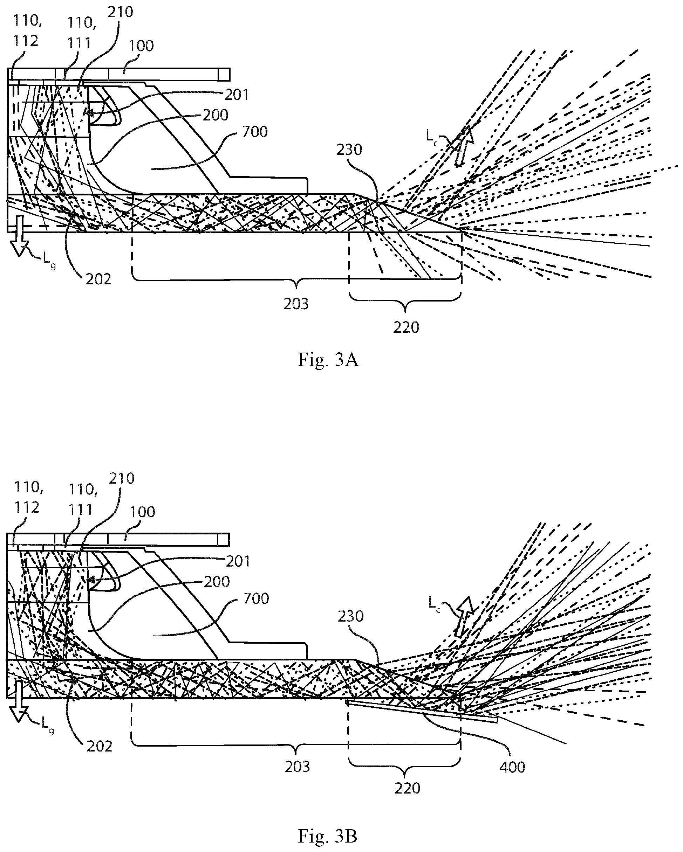

In the shown exemplary embodiment of Figure 1A, and further shown in more detail in the cross sectional angled view of Figure 2A, as well as the schematic cross-sectional side views of Figures 3A and 3B, the light guide element 200 comprises an essentially hollow-cylindrical neck section 201, an essentially plate-shaped ring section 203 and a bend section 202 connecting the neck section 201 and the plate-shaped ring section 203. These three sections hereby form the curved L shape of the light guide element 200, and thus direct the light coupled into the light guide element 200 from an inside of the luminaire 1, i.e., from the light mixing chamber 990 outwardly to an outer section of the luminaire 1 for decoupling from the light guide element 200 resulting in a light emission for indirect illumination Lᵢ.

In this implementation the end face of the neck section 201 faces the light sources 110, 111, 112 forming the light coupling surface 210 of the light guide element 200, and the plate-shaped ring section 203 has a wedge-shaped section viewed in radial section at the distal end region 220 of the light guide element forming the inclined light decoupling surface 230 of the light guide element 200. The tapered configuration of the light guide element 200 at the distal end region 220 hereby builds the inclined light decoupling surface 230 such that emitted light is emitted in a direction L_{c} that is essentially contrary to the general light emission direction L_{g} of the light sources 110, 111, 112.

Hereby light that is coupled into the light guide element 200 via the light coupling surface 210 is directed via the neck portion 201 towards the bend portion 202 where it is at least partially guided towards the plate-shaped ring section 203 where it is then decoupled from the light guide element 200 providing indirect illumination Lᵢ of the luminaire 1. Partially hereby means that it is not necessary that all of the light coupled into the light guide element 200 is ultimately used for indirect light Lᵢ emission. It is hereby conceivable that light that is coupled into the light guide element 200 in the light mixing chamber 990 is decoupled from the light guide element 200 within the light mixing chamber 990. Here it is possible that this light is redirected after decoupling from the light guide element 200 within the light mixing chamber 990 either towards the translucent cover plate 300, and is thus used for direct illumination L_{d} or may also be coupled into the light guide element 200 once again. Thus, in this embodiment the complete light emitted by the light sources 110, 111, 112 is either used for direct illumination L_{d} - and thus leaves the luminaire 1 in the general light emission direction L_{g} - or is used for indirect illumination Lᵢ - and thus leaves the luminaire 1 in a contrary light emission direction L_{c} that is a direction substantially contrary to the general light emission direction L_{g}, as shown in Figures 1A, 2A, 3A and 3B. Light being decoupled from the light guide element 200 in the light mixing chamber 990 may hereby be redirected via the lateral walls 700, 950 of the light mixing chamber 990 towards the transparent cover plate 300, whereas as a result the light may then be coupled into the light guide element 200 once again (being then guided towards the distal end region 220 of the light guide element 200) and not just trespass it towards the transparent cover plate 300.

In particular, light being coupled into the light guide element 200 via the light coupling surface 210 may be partially decoupled in the bend portion 202 from the light guide element 200 and directed towards the translucent cover plate 300. However, it is also possible that light being emitted by light sources 110, 111, 112 of the luminaire 1 enters the light guide element 200 through other surfaces of the light guide element 200 than the light coupling surface 210 prior to being guided towards the distal end region 220. This then happens mostly via side surfaces of the neck portion 201 or the bend portion 202 of the light guide element 200.

The light guide element 200 hereby preferably has a constant thickness w, respectively width w, over all its sections, such that the width w₂₀₁ of the neck portion 201 essentially corresponds to the width w₂₀₂ of the bend portion 202 and likewise to the width w₂₀₃ of the plate-shaped ring section portion 201, as exemplary shown in Figure 2B. In the shown embodiment, the light guide element 200 has a constant thickness w, w₂₀₁, w₂₀₂, w₂₀₃ of 3 to 4 mm up to the narrower distal end region 220 of the light guide element 200 with the inclined light decoupling surface 230. With the tapering at the distal end region 220 the width w of the light guide element 200 decreases - preferably in a linear manner.

As further shown in Figures 1A, 2A, 3A and 3B the luminaire 1 comprises a lateral reflector 700 arranged inside the luminaire 1 and at the light mixing chamber 990 of the luminaire 1. This lateral reflector 700 is positioned in general light emission direction L_{g} in-between the light source board 100 and a surface of the plate-shaped ring section 203 of the light guide element 200 facing the light source board 100. Hereby the lateral reflector 700 forms a lateral wall of the light mixing chamber 990.

As further illustrated in Figure 1A the luminaire 1 comprises a base body 900 that forms a housing of the luminaire 1. Hereby, the base body 900 has a recess, and the light source board 100 is positioned within the recess on an inner surface (i.e., on a light source mounting surface) of the base body 900, and the base body 900 may act as a heat sink of the downlight luminaire 1. As further shown, the base body 900 comprises a through hole 930, wherein an electrical connector 130 of the light source board 100 is positioned within the through hole 930, to allow for an easy and straightforward electrical connection of the luminaire 1.

Furthermore, the downlight luminaire 1 comprises a reflector foil 400 that is positioned in proximity of the distal end region 220 at a side of the light guide element 200 opposite to the inclined light decoupling surface 230. As in particularly shown in the enlarged view of Figure 1B the reflector foil 400 is arranged inclined to the surface of the distal end region 220 that faces the reflector foil 400, whereas the incline α₄₀₀ of the reflector foil 400 is different from the incline α₂₃₀ of the inclined light decoupling surface 230, , and especially is less steep compared to the incline α₂₃₀ of the inclined light decoupling surface 230. The influence of the reflector foil 400 is illustrated in synopsis of Figures 3A and 3B. As shown therein, using the reflector foil 400 results in a more focused light emission for indirect illumination Lᵢ towards a respective wall or ceiling. Hereby the light beams are bundled together and depending on the incline of the reflector foil 400 directed more or less steep in the indirect light emission direction L_{c}. The reflector foil 400 may preferably be highly reflective.

In Figures 3A and 3B mainly light guidance within the light guide element 200 is shown. Other light beams, e.g., light beams interacting with the lateral reflector 700 are not shown.

In the illustrated exemplary embodiment, a lower housing element 600 is attached to the base body 900, especially attached to the sidewall 950 of the base body 900. This coupling may be performed by a coupling element 988, such as a screw 988 or a pin 988 or the like, whereas the base body 900 and/or the lower housing element 600 comprise respective corresponding configurations 980, 680 for coupling. Here, the lower housing element 600 comprises a socket 680 for receiving the coupling element 988 and the base body 900 comprises a respective socket 980 for interaction with the coupling element 980, e.g., by form fit and/or by force fit. In particular the socket 980 can be realized by a protrusion 980 that reaches into the light guide element 200. Hereby the light guide element 200 has a corresponding recess 280 that allows for coupling with the base body 900 via the protrusion 980 and a respective coupling element 988, as exemplary shown in Figure 2A. With this implementation, also the positioning of the light guide element 200 is facilitated, ensuring a high standard of repeatability.

In general the light guide element 200 may be held within the luminaire 1 via clamping in-between the components of the luminaire 1, such as the lateral reflector 700, the base body 900 (and especially its side walls 950), and/or the lower housing element 600 (and especially its upper surface 610), as sketched in Figure 1A. Alternatively or additionally it is also conceivable that the light guide element 200 is fixated to the base body 900 via the coupling elements 988, as indicated in Figure 2A.

In the shown embodiment the reflector foil 400 is arranged on an upper surface 610 of the lower housing element 600, whereas in different embodiments of the luminaire 1 it would also be conceivable that the reflector foil 400 is arranged on an outer surface of the base body 900 for example. The upper surface 610 hereby may also comprise the socket 680 through which the lower housing element 600 is attached to the base body 900.

Furthermore, the luminaire 1 may also comprise a reflector element 800 that is positioned subsequent to the translucent cover plate 300 in the general light emission direction L_{g}. Hereby the reflector element 800 may be attached to the lower housing element 600 of the downlight luminaire 1 and/or to the base body 900. As shown the lower housing element 600 is further directly coupled to the base body 900. With the reflector element 800 the light emission for direct illumination L_{d} is further bundled.

In the shown embodiments of the luminaire 1 the section of the luminaire 1 having the inclined light decoupling surface 230, that is positioned on a side of the luminaire 1 opposite to the side for direct light emission L_{d} further is equipped with a lateral translucent cover 500 that covers the light guide element 200, and in particular the distal end region 220 of the light guide element 200 extending outwardly from the base body 900 of the luminaire 1, in indirect light emission direction Lᵢ. This protrusion of the light guide element 200 is further exemplary illustrated in the Figure 2B that shows the diameter d₉₀₀ of the base body 900, and the outer diameter d₂₃₀ of the inclined light decoupling surface 230. Hereby it is apparent that the outer diameter d₂₃₀ of the inclined light decoupling surface 230 is bigger than the diameter d₉₀₀ of the base body 900. The whole distal end region 220 of the light guide element 200 hereby has a larger diameter than the base body 900.

Figure 1B provides an enlarged view of the region of the luminaire 1 featuring the lateral translucent cover 500. Hereby it is apparent that the lateral translucent cover 500 is essentially conical in shape in a radial section, whereas furthermore the incline α₅₀₀ of the lateral translucent cover 500 is more steep compared to the incline α₂₃₀ of the inclined light decoupling surface 230. Also shown in Figure 1B the incline α₅₀₀ of the lateral translucent cover 500 is more steep compared to the incline α₄₀₀ of the reflector foil 400. With these different angles of the components interacting with light being emitted for indirect illumination Lᵢ, the respective light emission characteristics for indirect illumination Lᵢ of the luminaire 1 can be controlled.

Also the light emission characteristics for indirect illumination Lᵢ can be adjusted via different implementations of the lateral translucent cover 500 or even of the surface characteristics of the inclined light decoupling surface 230. Hereby it is conceivable that the inclined light decoupling surface 230 comprises a scattering structure for light mixture upon light decoupling.

Moreover, it is conceivable that the lateral translucent cover 500 is transparent, for minimising influence of the lateral translucent cover 500 on light effect. If however a respective influence of the lateral translucent cover 500 is desired, the lateral translucent cover 500 is preferably such configured that it comprises a groove structure, whereas further preferably this groove structure has an essential sinusoidal shape in a section perpendicular to the radial section. With this specific implementation an utmost homogeneous and comfortable indirect light illumination Lᵢ is achieved.

The lateral translucent cover 500 further acts as a protection against outside influences, such as unwanted intrusion, dust, moisture and/or water. Also the lateral translucent cover 500 enhances aesthetics of the luminaire 1.

Moreover, the lateral translucent cover 500 may be coupled to the base body 900 and/or the lower housing element 600, and may hereby be coupled via form-fit and/or force-fit.

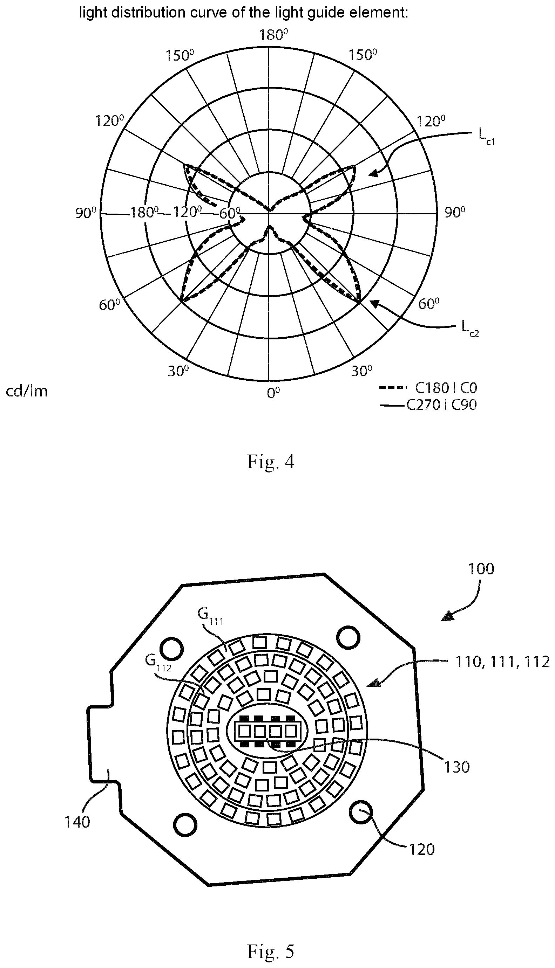

Figure 4 shows an exemplary embodiment of a light source board 100. Hereby it is apparent that the light sources 110, 111, 112 can be arranged in concentric circles essentially, whereas in the shown example three concentric rings are visible and a fourth concentric ring, which is the most proximal, is only partly complete. In the center of the light source board 100 the connector 130 is placed for coupling with an external electric connection for power supply and/or control communication. The electrical connector 130 hereby extends perpendicular to the plane of the light source board 100, whereas the connector 130 extends on a surface opposite to the surface where the light sources 110, 111, 112 are placed on. The light source board 100 may hereby have an orientation element 140, to ensure proper positioning within the luminaire 1. In the shown example this is achieved by an orientation structure 140 that destroys rotational symmetry of the light source board 100. The coupling holes 120 of the light source board 100 may be used for coupling the light source board 100 to the base body 900 of the luminaire 1, whereas coupling elements may interact with the coupling holes 120 and further preferably also with the fixation points 910 of the base body, providing a form-fit and/or force-fit coupling.

The Figures 2A and 2B illustrate an exemplary arrangement of the light guide element 200 in relation to the light source board 100. In the shown embodiment the light guide element 200 is arranged in the light mixing chamber 990 such that the light emitted by the light sources 110, 111, 112 arranged proximal on the light source board 100 in the general light emission direction L_{g} may reach the translucent cover plate 300 without interaction with the light guide element 200. Hereby, the light sources 110, 111, 112 arranged distal on the light source board 100, i.e., the light sources 110, 111, 112 arranged on an outer concentric ring, are positioned for direct light coupling into the light guide element 200 via its light coupling surface 210. Hence the diameter d_{L1} of the outer (first) concentric ring of the light sources 110, 111, 112 is essentially equal to the diameter d₂₁₀ of the light coupling surface 210 realized by the structure of the neck portion 201 of the light guide element 200. Hence, the diameter d₂₀₁ of the upper neck portion 201 in the region of the light coupling surface 210 essentially corresponds to the diameter d₂₁₀ of the light coupling surface 210. The other diameters d_{L2}, d_{L3} of the other concentric light source rings (see Figures 2A, 2B, 4) are smaller, and in particular smaller than an inner diameter of the neck portion 201, and thus of the light coupling surface 210. Hence in the shown embodiment, the diameter d_{L2}, d_{L3} of each of the more proximate arranged light source rings is smaller than the difference of the outer diameter d₂₁₀ of the light coupling surface 210 and the width w₂₁₀ of the light coupling surface 210: d_{L2}, d_{L3} < d₂₁₀ - w₂₁₀.

Hereby - again with view to the exemplary embodiment of the light source board 100 shown in Figure 5 - the different light sources 110, 111, 112 can be separated in different groups: the primary-direct-light group G₁₁₂ and the primary-indirect-light group G₁₁₁. The light sources 112 of the primary-direct-light group G₁₁₂ primary emit light towards the translucent cover plate 300, and the light sources 111 of the primary-indirect-light group G₁₁₁ primary emit light towards the light coupling surface 210 of the light guide element 200. Hence, the light sources 111 arranged on the distal light source ring are part of the primary-indirect-light group G₁₁₁ and the other light sources 112 are part of the primary-direct-light group G₁₁₂.

The light sources 110, 111, 112 being associated to the light guide element 200 are thus the light sources 111 of the primary-indirect-light group G₁₁₁, and these respective associated light sources 111 are arranged on the light source board 100 adjacent to the light coupling surface 210 of the light guide element 200.

To further improve operation of the luminaire 1 the different light groups G₁₁₁, G₁₁₂ are independently controllable by the downlight luminaire 1. Hence, the light sources 111 of the primary-indirect-light group G₁₁₁ that are associated to the light guide element 200, as well as the other light sources 112 of the primary-direct-light group G₁₁₂ can be separately controlled, such that brightness of the individual light groups G₁₁₁, G₁₁₂ can be individually adjusted according to a respective desired lighting scenario.

Hereby in the shown embodiment, a portion of light emitted by the light sources 112 of the primary-direct-light group G₁₁₂ is partially also coupled into the light guide element 200 - as previously discussed - and thereby guided towards the inclined light decoupling surface 230 for indirect illumination Lᵢ. Furthermore, the operation of the light sources 112 of the primary-direct-light group G₁₁₂ alone results in indirect light emission Lᵢ accounting for 1% to 5%, further preferably for 3%, of total light emission of the downlight luminaire 1. Hence, without the operation of the light sources 111 associated to the light guide element 200 an indirect illumination Lᵢ effect of the luminaire 1 is already achieved. Moreover, operation of the light sources 112 of the primary-direct-light group G112 together with the light sources 111 of the primary-indirect-light group G₁₁₁ results in indirect light emission Lᵢ accounting for up to 25%, preferably for up to 28% or 30% of total light emission of the downlight luminaire 1. With such a high portion of light being emitted for indirect illumination Lᵢ a large-area ceiling illumination is realized. Hence, the proportion of indirect illumination Lᵢ generated by the downlight luminaire 1 can be variably controlled - depending on the number and kind of active light sources 110, 111, 112. Hereby intermediate proportions of indirect light emission Lᵢ are achievable. Thus, different illumination scenarios can be operated depending on a respective required and/or desired situation.

With view to Figure 4 the indirect light emission Lᵢ is further spectated. Hereby, the light distribution curve of the light guide element 200 is shown, whereas the light emitted in an indirect light emission direction L_{c} is outlined. In particular the light emitted in the indirect light emission direction L_{c} is separated in an upward facing first group of light emitted the indirect light emission direction L_{c1} and in a downward facing second group of light emitted the indirect light emission direction L_{c2}. This light distribution curve hereby is in accordance to the simulated light paths of the light guide element 200 shown in Figure 3A. Hereby it is apparent, that light emitted by the light guide element 200 at the distal end region 220, and in particular via the bottom surface of the distal end region 220 and the inclined light decoupling surface 230 is emitted in two directions, whereas the downward facing second group of light emitted the indirect light emission direction L_{c2} is unwanted and thus should be redirected and bundled with the other light beams of the upward facing first group of light emitted the indirect light emission direction L_{c1}. This is especially performed by the reflector foil 400, or - if no reflector foil 400 is present - preferably by an other surface of the luminaire 1 being arranged at the bottom surface of the distal end region 220 opposite to the inclined light decoupling surface 230, e.g., by the upper surface 610 of the lower housing element 600. Figure 3B shows how the use of the reflective foil 400 redirects the downward facing second group of light emitted the indirect light emission direction L_{c2} upwardly resulting in a homogeneous upward facing - i.e., in a direction contrary to the general light emission direction L_{g} - light emission for indirect illumination Lᵢ.

As shown in Figure 4 the relation between the number of light sources of the primary-direct-light group and the number of light sources of the primary-indirect-light group preferably is around 2:1 (one third of light sources 110, 111, 112 belongs to the primary-indirect-light group G₁₁₁ and two thirds of light sources 110, 111, 112 belong to the primary-direct-light group G₁₁₂). Hereby the number of light sources of the primary-direct-light group may be in the range of 30 to 70, preferably in the range of 40 to 60, further preferably about 50 or 48, and the number of light sources of the primary-indirect-light group may be in the range of 15 to 35, preferably in the range of 20 to 30, further preferably about 25 or 24. Hereby each and every aforementioned value and in general relation between these values is conceivable. These ranges and these specific relations resulted in favourable light distribution for direct and indirect light emission. In the shown embodiment of Figure 4 the primary-indirect-light group G₁₁₁ comprises 24 light sources 111, and the primary-direct-light group G₁₁₂ comprises 48 light sources 112.

In an other implementation it is of course also conceivable that the most proximate light source ring is used for direct light coupling into the light coupling surface 210 of the light guide element 200, such that the light guide element 200 reaches to the centre of the luminaire 1. In such a configuration, the light emitted by the other light sources (i.e., the light sources 112 of the primary-direct-light group G₁₁₂) has to trespass the light guide element 200 prior reaching the translucent cover plate 300 for a light emission for direct illumination L_{d}. This is analogously valid with regard to an implementation where a middle light source ring, that is in-between a distal and a proximate light source ring is associated to the light guide element 200, whereas its light sources 111 are consequently arranged on the light source board 100 adjacent to the light coupling surface 210 of the light guide element 200.

Also mounting supports 920 are provided on the backside of the base body 900, to allow easy and flexible mounting of the luminaire 1. The luminaire 1 may be realised as a surface-mounted ceiling light, a surface-mounted wall light, a suspended luminaire, such as a pendant luminaire, or the like.

The light source board 100 may be coupled to the base body 900 via fixation points 910, whereas these fixation points 910 may also be configured for an improved heat dissipation from the light source board 100. Furthermore, the base body 900 may be also provided with heat fins for a further improved heat dissipation of the luminaire 1. The lateral reflector 700 may be attached to the base body 900 via form fit and/or via force fit.

The form of the luminaire 1 is hereby not limited to the shown exemplary embodiment. Hereby the luminaires base area may be elongated in shape, and in particular may be oval or rectangular. Alternatively, it is also conceivable that the luminaires base area is circular in shape, or square in shape. Preferably the shape of the light source board 100 and/or the positioning of the light sources 110, 111, 112 are adapted to the shape of the luminaires base area.

With the downlight luminaire 1 according to any of the herein described embodiments and implementations an utmost versatile downlight luminaire with direct and indirect illumination is realized.

## Claims

1. A downlight luminaire (1) having a light emission for direct illumination (L_{d}) and a light emission for indirect illumination (Lᵢ),
the luminaire (1) comprising:
- a light source board (100), having multiple light sources (110, 111, 112) for light emission in a general light emission direction (L_{g});
- a light mixing chamber (990) for homogeneous light mixing subsequent to the light source board (100) in the general light emission direction (L_{g}), wherein the light mixing chamber has lateral walls (950, 700);
- a translucent cover plate (300) that encloses the light mixing chamber (990) in the general light emission direction (L_{g}); and
- a light guide element (200), whereas the light guide element (200) is integrally formed and essentially flange-shaped with a curved L shape in a radial section, wherein the light guide element (200) has a light coupling surface (201) being positioned within the light mixing chamber (990) and facing the light source board (100), and
wherein the light guide element (200) has an inclined light decoupling surface (230) at a distal end region (220) of the light guide element (200), whereas the inclined light decoupling surface (230) of the light guide element (200) is positioned outside of and lateral to the light mixing chamber (990);
whereas light being coupled into the light guide element (200) via the light coupling surface (210) is partially directed towards the inclined light decoupling surface (230) within the light guide element (200), and
whereas light emitted via the translucent cover plate (300) is emitted for direct illumination (L_{d}) substantially in the general light emission direction (L_{g});
whereas light emitted via the inclined light decoupling surface (230) is emitted for indirect illumination (Lᵢ) and substantially emitted in an indirect light emission direction (L_{c}) being a direction contrary to the general light emission direction (L_{g}).

2. Luminaire according to claim 1,
wherein the light guide element (200) comprises an essentially hollow-cylindrical neck section (201), an essentially plate-shaped ring section (203) and a bend section (202) connecting the neck section (201) and the plate-shaped ring section (203), wherein the end face of the neck section (201) faces the light sources (110, 111, 112) forming the light coupling surface (210) of the light guide element (200), the plate-shaped ring section (203) has a wedge-shaped section viewed in radial section at the distal end region (220) of the light guide element forming the inclined light decoupling surface (230) of the light guide element (200);
wherein preferably the light guide element (200) is configured such that light being coupled into the light guide element (200) via the light coupling surface (210) is directed via the neck portion (201) towards the bend portion (202), where it is:
- partially guided towards the plate-shaped ring section (203), and
- partially decoupled in the bend portion (202) from the light guide element (200) and directed towards the translucent cover plate (300).

3. Luminaire according to any one of the preceding claims,
wherein the light sources (110, 111, 112) are arranged on the light source board (100) in concentric rings;
wherein preferably a diameter (L₁, L₂, L₃) of a respective ring with light sources (110, 111, 112) substantially corresponds to a diameter (d₂₁₀) of the light coupling surface (210).

4. Luminaire according to any one of the preceding claims,
wherein the light source board (100) has light sources (110, 111, 112) associated to the light guide element (200), wherein respective associated light sources (111) are arranged on the light source board (100) adjacent to the light coupling surface (210) of the light guide element (200).

5. Luminaire according to any one of the preceding claims,
wherein the light sources (110, 111, 112) are divided into different light groups, a primary-direct-light group (G₁₁₂) and a primary-indirect-light group (G₁₁₁), wherein the light sources (112) of the primary-direct-light group (G₁₁₂) primary emit light towards the translucent cover plate (300), and wherein the light sources (111) of the primary-indirect-light group (G₁₁₁) primary emit light towards the light coupling surface (210) of the light guide element (200);
wherein preferably the different light groups (G₁₁₁, G₁₁₂) are independently controllable by the downlight luminaire (1).

6. Luminaire according to claim 5,
wherein light emitted by the light sources (112) of the primary-direct-light group (G₁₁₂) is partially also coupled into the light guide element (200) and thereby guided towards the inclined light decoupling surface (230) for indirect illumination (Lᵢ); wherein preferably operation of the light sources (112) of the primary-direct-light group (G₁₁₂) results in indirect light emission (Lᵢ) accounting for 1% to 5%, further preferably for 3%, of total light emission of the downlight luminaire (1).

7. Luminaire according to claim 5 or 6,
wherein preferably operation of the light sources (112) of the primary-direct-light group (G₁₁₂) together with the light sources (111) of the primary-indirect-light group (G₁₁₁) results in indirect light emission (Lᵢ) accounting for up to 25%, preferably for up to 28% or 30% of total light emission of the downlight luminaire (1).

8. Luminaire according to any one of the preceding claims,
wherein the downlight luminaire (1) comprises a reflector foil (400) that is positioned in proximity of the distal end region (220) at a side of the light guide element (200) opposite to the inclined light decoupling surface (230);
wherein preferably the reflector foil (400) is highly reflective;
wherein preferably the reflector foil (400) is arranged inclined to the surface of the distal end region (220) that faces the reflector foil (400);
wherein further preferably the incline (α₄₀₀) of the reflector foil (400) is different from the incline (α₂₃₀) of the inclined light decoupling surface (230);
wherein further preferably the incline (α₄₀₀) of the reflector foil (400) is less steep compared to the incline (α₂₃₀) of the inclined light decoupling surface (230).

9. Luminaire according to any one of the preceding claims,
wherein the inclined light decoupling surface (230) comprises a scattering structure for light mixture upon light decoupling.

10. Luminaire according to any one of the preceding claims,
wherein the downlight luminaire (1) comprises a lateral translucent cover (500) that covers the distal end region (220) of the light guide element (200) in indirect light emission direction (L_{c}) facing the inclined light decoupling surface (230);
wherein preferably the lateral translucent cover (500) is conical in shape in a radial section, whereas further preferably the incline (α₅₀₀) of the lateral translucent cover (500) is more steep compared to the incline (α₂₃₀) of the inclined light decoupling surface (230);
wherein preferably the lateral translucent cover (500) is transparent;
wherein preferably the lateral translucent cover (500) comprises a groove structure, whereas further preferably the groove structure has an essential sinusoidal shape in a section perpendicular to the radial section.

11. Luminaire according to any one of the preceding claims,
wherein the luminaire comprises a base body (900), whereas the base body (900) comprises a recess, and the light source board (100) is positioned within the recess on an inner surface of the base body (900);
whereas preferably the base body (900) forms a heat sink of the downlight luminaire (1);
whereas preferably the base body (900) comprises a through hole (930), wherein an electrical connector (130) of the light source board (100) is positioned within the through hole (930).

12. Luminaire according to any one of the preceding claims,
wherein the downlight luminaire (1) comprises a reflector element (800) that is positioned subsequent to the translucent cover plate (300) in the general light emission direction (L_{g});
wherein preferably the reflector element (800) is attached to a lower housing element (600) of the downlight luminaire (1) and/or to a base body (900) of the luminaire (1), whereas further preferably the lower housing element (600) is attached to the base body (900).

13. Luminaire according to any one of the preceding claims,
wherein the light mixing chamber (990) comprises a lateral reflector (700) that is positioned in general light emission direction (L_{g}) in-between the light source board (100) and a surface of the light guide element (200) facing the light source board (100), which is preferably the plate-shaped ring section (203) facing the light source board (100), wherein the lateral reflector (700) is a lateral wall of the light mixing chamber (990).

14. Luminaire according to any one of the preceding claims,
a luminaires base area is elongated in shape, and is in particular oval or rectangular; or the luminaires base area is circular in shape; or
the luminaires base area is square in shape;
wherein preferably the shape of the light source board (100) and/or the positioning of the light sources (110, 111, 112) are adapted to the shape of the luminaires base area.

15. Luminaire according to any one of the preceding claims,
wherein the light guide element (200) has a constant thickness (w, w₂₀₁, w₂₀₂, w₂₀₃) of 3-4 mm up to the narrower distal end region (220) of the light guide element (200) with the inclined light decoupling surface (230); and/or
wherein the translucent cover plate (300) is diffuse; and/or
wherein the light sources (110, 111, 112) are LEDs light sources (110, 111, 112) and the light source board (100) being an LED board (100); and/or
wherein the downlight luminaire (1) is one of a surface-mounted ceiling light; a surface-mounted wall light; a suspended luminaire, such as a pendant luminaire; or the like.

## Patentansprüche

1. **Downlight-Leuchte** (1) mit einer Lichtabstrahlung zur direkten Beleuchtung (Ld) und einer Lichtabstrahlung zur indirekten Beleuchtung (Li), wobei die Leuchte (1) Folgendes umfasst:
eine Lichtquellenplatine (100) mit mehreren Lichtquellen (110, 111, 112) zur Lichterzeugung in einer allgemeinen Lichtabstrahlrichtung (Lg);
eine Lichtmischkammer (990) zur homogenen Lichtmischung, angeordnet nach der Lichtquellenplatine (100) in der allgemeinen Lichtabstrahlrichtung (Lg), wobei die Lichtmischkammer Seitenwände (950, 700) aufweist;
eine transluzente Abdeckplatte (300), welche die Lichtmischkammer (990) in der allgemeinen Lichtabstrahlrichtung (Lg) abschließt; und
ein Lichtleitelement (200), wobei das Lichtleitelement (200) einstückig ausgebildet und im Querschnitt im Wesentlichen flanschförmig mit gekrümmter L-Form ist, wobei das Lichtleitelement (200) eine Lichteinkoppelungsfläche (210) aufweist, die innerhalb der Lichtmischkammer (990) angeordnet und der Lichtquellenplatine (100) zugewandt ist, und wobei das Lichtleitelement (200) eine geneigte Lichtauskopplungsfläche (230) an einem distalen Endbereich (220) des Lichtleitelements (200) aufweist, wobei die geneigte Lichtauskopplungsfläche (230) des Lichtleitelements (200) außerhalb und seitlich der Lichtmischkammer (990) positioniert ist;
wobei Licht, das über die Lichteinkoppelungsfläche (210) in das Lichtleitelement (200) eingekoppelt wird, innerhalb des Lichtleitelements (200) teilweise zur geneigten Lichtauskopplungsfläche (230) geleitet wird, und
wobei Licht, das über die transluzente Abdeckplatte (300) ausgestrahlt wird, zur direkten Beleuchtung (Ld) im Wesentlichen in der allgemeinen Lichtabstrahlrichtung (Lg) abgegeben wird;
wobei Licht, das über die geneigte Lichtauskopplungsfläche (230) ausgestrahlt wird, zur indirekten Beleuchtung (Li) abgegeben wird und im Wesentlichen in einer indirekten Lichtabstrahlrichtung (Le) abgegeben wird, welche entgegengesetzt zur allgemeinen Lichtabstrahlrichtung (Lg) verläuft.

2. **Leuchte nach Anspruch 1,**
wobei das Lichtleitelement (200) einen im Wesentlichen hohlzylindrischen Halsabschnitt (201), einen im Wesentlichen plattenförmigen Ringabschnitt (203) und einen Biegeabschnitt (202) umfasst, der den Halsabschnitt (201) mit dem Ringabschnitt (203) verbindet;
wobei die Stirnfläche des Halsabschnitts (201) den Lichtquellen (110, 111, 112) zugewandt ist und die Lichteinkoppelungsfläche (210) des Lichtleitelements (200) bildet, und der Ringabschnitt (203) an dem distalen Endbereich (220) des Lichtleitelements (200) im radialen Schnitt einen keilförmigen Abschnitt aufweist, der die geneigte Lichtauskopplungsfläche (230) des Lichtleitelements (200) bildet;
wobei vorzugsweise das Lichtleitelement (200) so konfiguriert ist, dass Licht, das über die Lichteinkoppelungsfläche (210) in das Lichtleitelement (200) eingekoppelt wird, über den Halsabschnitt (201) zum Biegeabschnitt (202) geleitet wird, wo es
- teilweise zum Ringabschnitt (203) geführt wird, und
- teilweise im Biegeabschnitt (202) aus dem Lichtleitelement (200) ausgekoppelt und zur transluzenten Abdeckplatte (300) geleitet wird.

3. **Leuchte nach einem der vorhergehenden Ansprüche,**
wobei die Lichtquellen (110, 111, 112) auf der Lichtquellenplatine (100) in konzentrischen Ringen angeordnet sind;
wobei vorzugsweise ein Durchmesser (L1, L2, L3) eines jeweiligen Rings mit Lichtquellen (110, 111, 112) im Wesentlichen dem Durchmesser (d210) der Lichteinkoppelungsfläche (210) entspricht.

4. **Leuchte nach einem der vorhergehenden Ansprüche,**
wobei die Lichtquellenplatine (100) Lichtquellen (110, 111, 112) aufweist, die dem Lichtleitelement (200) zugeordnet sind, wobei die zugeordneten Lichtquellen (111) auf der Lichtquellenplatine (100) angrenzend an die Lichteinkoppelungsfläche (210) des Lichtleitelements (200) angeordnet sind.

5. **Leuchte nach einem der vorhergehenden Ansprüche,**
wobei die Lichtquellen (110, 111, 112) in unterschiedliche Lichtgruppen unterteilt sind, nämlich eine primär-direkte Lichtgruppe (G112) und eine primär-indirekte Lichtgruppe (G111), wobei die Lichtquellen (112) der primär-direkten Lichtgruppe (G₁₁₂) hauptsächlich Licht auf die transluzente Abdeckplatte (300) richten, und wobei die Lichtquellen (111) der primär-indirekten Lichtgruppe (G111) hauptsächlich Licht auf die Lichteinkoppelungsfläche (210) des Lichtleitelements (200) richten;
wobei vorzugsweise die verschiedenen Lichtgruppen (G111, G112) unabhängig voneinander von der Downlight-Leuchte (1) ansteuerbar sind.

6. **Leuchte nach Anspruch 5,**
wobei Licht, das von den Lichtquellen (112) der primär-direkten Lichtgruppe (G₁₁₂) ausgestrahlt wird, auch teilweise in das Lichtleitelement (200) eingekoppelt und dabei zur geneigten Lichtauskopplungsfläche (230) für eine indirekte Beleuchtung (Li) geführt wird;
wobei vorzugsweise der Betrieb der Lichtquellen (112) der primär-direkten Lichtgruppe (G112) zu einer indirekten Lichtabstrahlung (Li) führt, die 1 % bis 5 % - vorzugsweise etwa 3 % - der gesamten Lichtabstrahlung der Downlight-Leuchte (1) ausmacht.

7. **Leuchte nach Anspruch 5 oder 6,**
wobei vorzugsweise der Betrieb der Lichtquellen (112) der primär-direkten Lichtgruppe (G112) zusammen mit den Lichtquellen (111) der primär-indirekten Lichtgruppe (G111) zu einer indirekten Lichtabstrahlung (Li) führt, die bis zu 25 % - vorzugsweise bis zu 28 % oder bis zu 30 % - der gesamten Lichtabstrahlung der Downlight-Leuchte (1) ausmacht.

8. **Leuchte nach einem der vorhergehenden Ansprüche,**
wobei die Downlight-Leuchte (1) eine Reflexionsfolie (400) umfasst, die in der Nähe des distalen Endbereichs (220) an einer Seite des Lichtleitelements (200) angeordnet ist, welche der geneigten Lichtauskopplungsfläche (230) gegenüberliegt;
wobei vorzugsweise die Reflexionsfolie (400) hochreflektierend ist;
wobei vorzugsweise die Reflexionsfolie (400) geneigt relativ zu der Oberfläche des distalen Endbereichs (220) angeordnet ist, welche der Reflexionsfolie (400) zugewandt ist;
wobei weiter vorzugsweise die Neigung (a400) der Reflexionsfolie (400) sich von der Neigung (a230) der geneigten Lichtauskopplungsfläche (230) unterscheidet;
wobei weiter vorzugsweise die Neigung (a400) der Reflexionsfolie (400) geringer ist als die Neigung (a230) der geneigten Lichtauskopplungsfläche (230).

9. **Leuchte nach einem der vorhergehenden Ansprüche,**
wobei die geneigte Lichtauskopplungsfläche (230) eine Streustruktur für die Lichtmischung bei der Lichtauskopplung aufweist.

10. **Leuchte nach einem der vorhergehenden Ansprüche,**
wobei die Downlight-Leuchte (1) eine seitliche transluzente Abdeckung (500) umfasst, die den distalen Endbereich (220) des Lichtleitelements (200) in indirekter Lichtabstrahlrichtung (Le) abdeckt und der geneigten Lichtauskopplungsfläche (230) zugewandt ist;
wobei vorzugsweise die seitliche transluzente Abdeckung (500) im radialen Schnitt im Wesentlichen konisch geformt ist, und wobei weiter vorzugsweise die Neigung (a500) der seitlichen transluzenten Abdeckung (500) steiler ist als die Neigung (a230) der geneigten Lichtauskopplungsfläche (230);
wobei vorzugsweise die seitliche transluzente Abdeckung (500) transparent ist; wobei vorzugsweise die seitliche transluzente Abdeckung (500) eine Rillenstruktur aufweist, wobei weiter vorzugsweise die Rillenstruktur in einem Schnitt senkrecht zum radialen Schnitt im Wesentlichen sinusförmig verläuft.

11. **Leuchte nach einem der vorhergehenden Ansprüche,**
wobei die Leuchte ein Grundgehäuse (900) umfasst, wobei das Grundgehäuse (900) eine Ausnehmung aufweist und die Lichtquellenplatine (100) innerhalb dieser Ausnehmung an einer Innenfläche des Grundgehäuses (900) angeordnet ist;
wobei vorzugsweise das Grundgehäuse (900) einen Kühlkörper der Downlight-Leuchte (1) bildet;
wobei vorzugsweise das Grundgehäuse (900) eine Durchgangsöffnung (930) aufweist, in der ein elektrischer Verbinder (130) der Lichtquellenplatine (100) positioniert ist.

12. **Leuchte nach einem der vorhergehenden Ansprüche,**
wobei die Downlight-Leuchte (1) ein Reflektorelement (800) umfasst, das unmittelbar nach der transluzenten Abdeckplatte (300) in der allgemeinen Lichtabstrahlrichtung (Lg) angeordnet ist;
wobei vorzugsweise das Reflektorelement (800) an einem unteren Gehäuseelement (600) der Downlight-Leuchte (1) und/oder an einem Grundgehäuse (900) der Leuchte (1) angebracht ist;
wobei weiter vorzugsweise das untere Gehäuseelement (600) am Grundgehäuse (900) angebracht ist.

13. **Leuchte nach einem der vorhergehenden Ansprüche,**
wobei die Lichtmischkammer (990) einen seitlichen Reflektor (700) umfasst, der in der allgemeinen Lichtabstrahlrichtung (Lg) zwischen der Lichtquellenplatine (100) und einer dem Lichtleitelement (200) zugewandten Oberfläche angeordnet ist, wobei diese Oberfläche vorzugsweise der der Lichtquellenplatine (100) zugewandte Ringabschnitt (203) ist,
wobei der seitliche Reflektor (700) eine Seitenwand der Lichtmischkammer (990) bildet.

14. **Leuchte nach einem der vorhergehenden Ansprüche,**
deren Grundfläche eine langgestreckte Form aufweist und insbesondere oval oder rechteckig ist; oder deren Grundfläche kreisförmig ist; oder deren Grundfläche quadratisch ist;
wobei vorzugsweise die Form der Lichtquellenplatine (100) und/oder die Anordnung der Lichtquellen (110, 111, 112) an die Form der Grundfläche der Leuchte angepasst sind.

15. **Leuchte nach einem der vorhergehenden Ansprüche,**
wobei das Lichtleitelement (200) eine konstante Dicke (W, W201, W202, W203) von 3-4 mm aufweist - bis hin zu dem verjüngten distalen Endbereich (220) des Lichtleitelements (200) mit der geneigten Lichtauskopplungsfläche (230); und/oder
wobei die transluzente Abdeckplatte (300) diffus ist; und/oder
wobei die Lichtquellen (110, 111, 112) LED-Lichtquellen (110, 111, 112) sind und die Lichtquellenplatine (100) eine LED-Platine (100) ist; und/oder
wobei die Downlight-Leuchte (1) eine Oberflächenanbau-Deckenleuchte, eine Oberflächenanbau-Wandleuchte, ein abgependeltes Beleuchtungskörper (z. B. eine Pendelleuchte) oder dergleichen ist.

## Revendications

1. **Luminaire downlight (1)** comportant une émission de lumière pour l'éclairage direct (Ld) et une émission de lumière pour l'éclairage indirect (Li), ledit luminaire (1) comprenant :
une carte de sources lumineuses (100) comportant de multiples sources lumineuses (110, 111, 112) conçues pour émettre de la lumière dans une direction générale d'émission lumineuse (Lg) ;
une chambre de mélange de lumière (990) pour un mélange homogène de la lumière, disposée après la carte de sources lumineuses (100) dans la direction générale d'émission lumineuse (Lg), ladite chambre de mélange de lumière ayant des parois latérales (950, 700) ;
une plaque de recouvrement translucide (300) qui ferme la chambre de mélange de lumière (990) dans la direction générale d'émission lumineuse (Lg) ; et
un élément guide de lumière (200), ledit élément guide de lumière (200) étant formé d'un seul tenant et sensiblement en forme de bride avec une forme courbe en L en section radiale, ledit élément guide de lumière (200) ayant une surface d'entrée de lumière (210) disposée à l'intérieur de la chambre de mélange de lumière (990) et orientée vers la carte de sources lumineuses (100), et l'élément guide de lumière (200) ayant une surface de sortie de lumière inclinée (230) au niveau d'une zone d'extrémité distale (220) de l'élément guide de lumière (200), ladite surface de sortie de lumière inclinée (230) de l'élément guide de lumière (200) étant positionnée à l'extérieur de la chambre de mélange de lumière (990) et latéralement par rapport à celle-ci ;
de telle sorte que la lumière couplée dans l'élément guide de lumière (200) via la surface d'entrée de lumière (210) est partiellement dirigée vers la surface de sortie de lumière inclinée (230) à l'intérieur de l'élément guide de lumière (200),
et que la lumière émise via la plaque de recouvrement translucide (300) est émise pour l'éclairage direct (Ld) sensiblement dans la direction générale d'émission lumineuse (Lg),
tandis que la lumière émise via la surface de sortie de lumière inclinée (230) est émise pour l'éclairage indirect (Li) et sensiblement émise dans une direction d'émission lumineuse indirecte (Le), étant opposée à la direction générale d'émission lumineuse (Lg).

2. **Luminaire selon la revendication 1,**
dans lequel l'élément guide de lumière (200) comprend une section de col sensiblement cylindrique creuse (201), une section annulaire sensiblement en forme de plaque (203) et une section de coude (202) connectant la section de col (201) et la section annulaire (203) ;
dans lequel la face d'extrémité de la section de col (201) est orientée vers les sources lumineuses (110, 111, 112) et forme la surface d'entrée de lumière (210) de l'élément guide de lumière (200), et la section annulaire (203) présente, en section radiale, une portion en forme de coin au niveau de la zone d'extrémité distale (220) de l'élément guide de lumière (200) formant la surface de sortie de lumière inclinée (230) de l'élément guide de lumière (200) ;
dans lequel, de préférence, l'élément guide de lumière (200) est configuré de sorte que la lumière couplée dans l'élément guide de lumière (200) via la surface d'entrée de lumière (210) est guidée via la section de col (201) vers la section de coude (202), où elle est :
- partiellement guidée vers la section annulaire (203), et
- partiellement découplée dans la section de coude (202) de l'élément guide de lumière (200) et guidée vers la plaque de recouvrement translucide (300).

3. **Luminaire selon l'une quelconque des revendications précédentes,**
dans lequel les sources lumineuses (110, 111, 112) sont agencées sur la carte de sources lumineuses (100) en anneaux concentriques ;
dans lequel, de préférence, le diamètre (L1, L2, L3) d'un anneau de sources lumineuses (110, 111, 112) correspond sensiblement au diamètre (d210) de la surface d'entrée de lumière (210).

4. **Luminaire selon l'une quelconque des revendications précédentes,**
dans lequel la carte de sources lumineuses (100) comporte des sources lumineuses (110, 111, 112) associées à l'élément guide de lumière (200), lesdites sources lumineuses associées (111) étant disposées sur la carte de sources lumineuses (100) à proximité immédiate de la surface d'entrée de lumière (210) de l'élément guide de lumière (200).

5. **Luminaire selon l'une quelconque des revendications précédentes,**
dans lequel les sources lumineuses (110, 111, 112) sont réparties en différents groupes de sources lumineuses, à savoir un groupe primaire de lumière directe (G112) et un groupe primaire de lumière indirecte (G111), dans lequel les sources lumineuses (112) du groupe primaire de lumière directe (G112) émettent principalement de la lumière vers la plaque de recouvrement translucide (300), et dans lequel les sources lumineuses (111) du groupe primaire de lumière indirecte (G111) émettent principalement de la lumière vers la surface d'entrée de lumière (210) de l'élément guide de lumière (200) ;
dans lequel, de préférence, les différents groupes de lumière (G111, G112) sont contrôlables indépendamment par le luminaire downlight (1).

6. **Luminaire selon la revendication 5,**
dans lequel la lumière émise par les sources lumineuses (112) du groupe primaire de lumière directe (G112) est également partiellement couplée dans l'élément guide de lumière (200) et ainsi guidée vers la surface de sortie de lumière inclinée (230) pour l'éclairage indirect (Li) ;
dans lequel, de préférence, le fonctionnement des sources lumineuses (112) du groupe primaire de lumière directe (G112) entraîne une émission de lumière indirecte (Li) représentant de 1 % à 5 %, de préférence environ 3 %, de l'émission lumineuse totale du luminaire downlight (1).

7. **Luminaire selon la revendication 5 ou 6,**
dans lequel, de préférence, le fonctionnement des sources lumineuses (112) du groupe primaire de lumière directe (G112) conjointement avec les sources lumineuses (111) du groupe primaire de lumière indirecte (G111) entraîne une émission de lumière indirecte (Li) atteignant jusqu'à 25 %, de préférence jusqu'à 28 % ou 30 %, de l'émission lumineuse totale du luminaire downlight (1).

8. **Luminaire selon l'une quelconque des revendications précédentes,**
dans lequel le luminaire downlight (1) comprend une feuille réfléchissante (400) disposée à proximité de la zone d'extrémité distale (220) du côté de l'élément guide de lumière (200) opposé à la surface de sortie de lumière inclinée (230) ;
dans lequel, de préférence, la feuille réfléchissante (400) est hautement réfléchissante ;
dans lequel, de préférence, la feuille réfléchissante (400) est agencée de manière inclinée par rapport à la surface de la zone d'extrémité distale (220) qui fait face à ladite feuille réfléchissante (400) ;
dans lequel, de préférence, l'inclinaison (a400) de la feuille réfléchissante (400) est différente de l'inclinaison (a230) de la surface de sortie de lumière inclinée (230) ;
dans lequel, de préférence, l'inclinaison (a400) de la feuille réfléchissante (400) est moins prononcée que l'inclinaison (a230) de la surface de sortie de lumière inclinée (230).

9. **Luminaire selon l'une quelconque des revendications précédentes,**
dans lequel la surface de sortie de lumière inclinée (230) comporte une structure de diffusion pour le mélange de la lumière lors du découplage de celle-ci.

10. **Luminaire selon l'une quelconque des revendications précédentes,**
dans lequel le luminaire downlight (1) comprend un couvercle translucide latéral (500) qui recouvre la zone d'extrémité distale (220) de l'élément guide de lumière (200) dans la direction d'émission lumineuse indirecte (Le) en faisant face à la surface de sortie de lumière inclinée (230) ;
dans lequel, de préférence, le couvercle translucide latéral (500) est de forme sensiblement conique en section radiale, et dans lequel, de préférence, l'inclinaison (a500) dudit couvercle translucide latéral (500) est plus prononcée que l'inclinaison (a230) de la surface de sortie de lumière inclinée (230) ;
dans lequel, de préférence, le couvercle translucide latéral (500) est transparent ; dans lequel, de préférence, le couvercle translucide latéral (500) comprend une structure à rainures, et dans lequel, de préférence, ladite structure à rainures a une forme sensiblement sinusoïdale dans une section perpendiculaire à la section radiale.

11. **Luminaire selon l'une quelconque des revendications précédentes,**
dans lequel le luminaire comprend un corps de base (900), le corps de base (900) comportant un évidement, et la carte de sources lumineuses (100) étant placée à l'intérieur de cet évidement sur une surface interne du corps de base (900) ;
dans lequel, de préférence, le corps de base (900) forme un dissipateur de chaleur du luminaire downlight (1) ;
dans lequel, de préférence, le corps de base (900) comprend un trou traversant (930) dans lequel un connecteur électrique (130) de la carte de sources lumineuses (100) est positionné.

12. **Luminaire selon l'une quelconque des revendications précédentes,**
dans lequel le luminaire downlight (1) comprend un élément réflecteur (800) qui est disposé après la plaque de recouvrement translucide (300) dans la direction générale d'émission lumineuse (Lg) ;
dans lequel, de préférence, l'élément réflecteur (800) est fixé à un élément de boîtier inférieur (600) du luminaire downlight (1) et/ou à un corps de base (900) du luminaire (1) ;
dans lequel, de préférence, l'élément de boîtier inférieur (600) est fixé audit corps de base (900).

13. **Luminaire selon l'une quelconque des revendications précédentes,**
dans lequel la chambre de mélange de lumière (990) comprend un réflecteur latéral (700) qui est positionné dans la direction générale d'émission lumineuse (Lg) entre la carte de sources lumineuses (100) et une surface de l'élément guide de lumière (200) faisant face à la carte de sources lumineuses (100), ladite surface étant de préférence la section annulaire (203) orientée vers la carte de sources lumineuses (100),
dans lequel le réflecteur latéral (700) forme une paroi latérale de la chambre de mélange de lumière (990).

14. **Luminaire selon l'une quelconque des revendications précédentes,**
dont la surface de base est allongée et est en particulier ovale ou rectangulaire ; ou dont la surface de base est circulaire ; ou dont la surface de base est carrée ;
dans lequel, de préférence, la forme de la carte de sources lumineuses (100) et/ou le positionnement des sources lumineuses (110, 111, 112) sont adaptés à la forme de la surface de base du luminaire.

15. **Luminaire selon l'une quelconque des revendications précédentes,**
dans lequel l'élément guide de lumière (200) a une épaisseur constante (W, W201, W202, W203) de 3 à 4 mm jusqu'à la zone d'extrémité distale (220) de l'élément guide de lumière (200) présentant la surface de sortie de lumière inclinée (230), ladite zone étant plus étroite ; et/ou
dans lequel la plaque de recouvrement translucide (300) est diffuse ; et/ou dans lequel les sources lumineuses (110, 111, 112) sont des sources lumineuses à LED (110, 111, 112) et la carte de sources lumineuses (100) est une carte à LED (100) ; et/ou
dans lequel le luminaire downlight (1) est l'un des suivants : un luminaire de plafond monté en saillie, un luminaire mural monté en saillie, un luminaire suspendu tel qu'un luminaire pendentif, ou analogue.
